# EUROPEAN PATENT SPECIFICATION

(11) **EP 2 808 247 B1**
(45) Date of publication and mention of the grant of the patent: **02.01.2019**
(21) Application number: 13169643.7
(22) Date of filing: 29.05.2013
(51) Int. Cl.: B63H 5/125, B63H 23/00

(54) **A propulsion unit with electric motor, whereby the stator is arranged in a ring around the propeller**
Antriebseinheit mit elektrischem Motor, wobei der Stator in einem Ring um den Propeller angebracht ist
Unité de propulsion comprenant un moteur éléctrique dont le stator entoure l'hélice

(43) Date of publication of application: 03.12.2014
(73) Proprietor: ABB Schweiz AG, 5400 Baden (CH)
(72) Inventor: Varis, Jukka, 00980 Helsinki (FI); Lempiäinen, Tommi, 00980 Helsinki (FI)
(74) Representative: Kolster Oy Ab

(56) References cited:
- EP-A2- 0 111 908
- FR-A1- 2 336 297
- US-A- 5 522 335
- US-A1- 2010 190 392

## Description

### FIELD OF THE INVENTION

The present invention relates to a propulsion unit according to the preamble of claim 1.

### BACKGROUND ART

Prior art propulsion units usually comprise a casing, an electric motor, a shaft, and a propeller. The casing is rotatably attached to a hull of a vessel. The electric motor is positioned within the casing. The shaft passes through the electric motor and is rotatable supported with bearings within the casing. The propeller is attached to an outer end of the shaft protruding from the casing. In propulsion units where a high thrust at low speeds is needed there is further an annular housing surrounding the perimeter of the propeller. The annular housing is attached to an upper portion of the casing and to one or several vanes being supported at the casing. The annular housing forms a central duct with an axial flow path for water from a first end to a second end of the annular housing. The thrust produced by the propeller is amplified by the housing at low speeds. The situation can be such that the propeller produces 60% of the total thrust and the housing produces 40% of the total thrust at low speeds. Housings are used in so called Dynamic Positioning (DP) vessels used in oil drilling. There are several propulsion units in such vessels and the vessel is kept steady in position by the propulsion units. A big thrust is thus needed at low speed in order to keep the vessel continuously in position in rough seas. The housing increases the thrust produced by the propeller only at low speeds i.e. at speeds in the order of less than about 15 knots.

WO patent publication 99/14113 discloses one example of a propulsion system comprising a casing, an electric motor, a shaft, a propeller, and an annular housing surrounding the perimeter of the propeller. The system is especially intended for vessels moving in ice conditions. The system comprises a strut rotatably supported at the hull of the vessel, a torpedo-shaped casing attached to the strut, a drive shaft and an electric motor within the casing, a propeller attached to an outer end portion of the drive shaft, and a nozzle surrounding the propeller. The nozzle has a water inlet and a water outlet. Rotatable blades or vanes are attached to an outermost end of the drive shaft outside the water inlet of the nozzle for breaking and/or crushing ice before the ice enters into the nozzle.

The problem in such prior art propulsion units comprising a casing, an electric motor within the casing and a propeller outside the casing driven by the electric motor is lack of torque at low speed. The diameter of the electric motor within the casing is limited and the also the length of the electric motor within the casing is limited. The housing surrounding the outer perimeter of the propeller will increase the thrust of the arrangement at low speed. There is however a need for more torque at low speed and thus more thrust at low speed in the previously mentioned DP vessels.

Another type of prior art propulsion units are based on so called rim drive arrangements. A rim drive propulsion unit comprises a rotor positioned on the outer periphery of the propeller and a stator positioned within an annular housing surrounding the propeller. The diameter of the rotor and the stator of the electric motor can be increased considerably, whereby also the torque of the electric motor can be increased. The propeller is attached to a shaft being supported by bearings on both sides of a radial plane passing through the axial middle point of the rotor and the stator. The shaft and the bearings are thus within the flow path in the interior of the propulsion unit.

US patent publication 2012/0093668 discloses a rim driven thruster comprising an annular housing, a propulsion assembly, a magnetic rotor assembly and a stator assembly. The annular housing defines a flow path extending along an axis. A conical forward fairing is connected to the front end of the housing and a cylindrical aft fairing is connected to a rearward end of the housing. The propulsion assembly is supported within the housing and comprises propeller blades extending radially from the axis of the flow path. The propeller blades are configured to rotate about the axis. The magnetic rotor assembly is mounted to radially outer ends of the propeller blades. The stator assembly comprises spaced propeller drive modules mounted to an inner circumferential surface of the annular housing. The propeller drive modules are configured to provide electromagnetic torque to the magnetic rotor assembly. There is a shaft extending along the axis in the middle of the annular housing and support brackets at both ends of the annular housing extending in the radial direction from the inner surface of the annular housing towards the axis in the middle of the annular housing. The shaft is rotatably supported by bearings at both ends to the support brackets.

US patent 6,837,757 discloses a rim driven propulsion arrangement. The arrangement comprises a housing supported by a strut from an adjacent vessel which is to be propelled by the propulsion unit. The housing forms a duct with an axial flow path for water. The inner surface of the duct is conical at the aft end of the housing. A cylindrical rotor support assembly is situated centrally within the housing and supported at an aft end by an array of support members in the form of blades at the housing. A rotor assembly comprises a hub and radial propeller blades attached to the hub. The hub is rotatably supported with radial bearings at a central stationary support shaft within the rotor support assembly at a forward end of the rotor support assembly. The axial bearing i.e. the thrust bearing comprises a thrust ring rotating with the rotor at the forward end of the hub and a stationary thrust plate affixed to the rotor support assembly. Water is used as lubrication medium in the thrust bearing.

JP patent publication 10257752 discloses a drive unit for watercraft. The drive unit comprises a central shaft rotatably supported with bearings within a cylindrical casing and an annular housing surrounding the cylindrical casing. A hub is positioned on the central shaft, said hub having propeller blades attached radially thereto. A coupling unit is attached to the outer edges of the propeller blades. Several rotor coils are arranged on the coupling unit. Stator coils are positioned in the annular housing surrounding the casing. Either the stator coil or the rotor coil is made of superconducting material and the other coil is made of usual conducting material. The propeller and thereby also the central shaft is rotated by supplying current to the stator coil so as to generate an electromagnetic force between the stator coils and the rotor coils.

All the three above mentioned prior art rim drive propulsion units have in common that a radial plane passing through the axial middle point of the rotor coincides with a radial plane passing through the axial middle point situated between the radial bearings of the central shaft. This has been the standard way to realize a rim drive propulsion unit in the past.

US 5,522,335 discloses an auxiliary thruster mounted into a hull of a marine vessel. The hull is provided with a recess for the auxiliary thruster. The thruster comprises a cylindrical horizontally extending nozzle attached to a vertical tubular mast. The thruster can be lowered to an outside position below the vessel and raised to an inside position in a traverse tunnel within the hull of the vessel. A central hub is positioned at the center of the nozzle. A propeller shaft is supported with bearings within the central hub. The blades of the propeller are attached to a rotating outer shell of the central hub. The outer shell of the central hub is supported with bearings at a stationary central portion of the central hub. The stationary central portion of the central hub is attached with vanes to the nozzle behind the propeller. There is a rotor rim on the outer periphery of the propeller blades and a stator within the nozzle.

EP 111 908 discloses in figure 2 an electric propulsion unit being rotatably attached with a shaft to the vessel. A horizontally extending annular housing or nozzle is attached to the vertical shaft. A tubular horizontally extending torpedo is positioned in the middle of the annular housing. A propeller shaft extends within the torpedo. The torpedo is attached with a grid comprising three arms to the annular housing. A propeller hub is positioned at an end of the torpedo opposite to the grid. Propeller blades are attached to the propeller hub. There is a rotor rim on the outer periphery of the propeller blades and a stator within the annular housing or nozzle. The bearing arrangement of the propeller hub is not disclosed.

US 2010/0190392 discloses a rudder propeller drive. The drive motor i.e. an electric motor is positioned within the vessel. The vertically extending drive motor is connected via a hydrodynamic clutch to a vertical first shaft passing downwards to a rudder propeller housing positioned below the vessel. There is a horizontal second shaft in the rudder propeller housing. The outer end of said second shaft is connected to the propeller positioned outside the rudder propeller housing. The first shaft is connected with a transmission to the second shaft. There is further a nozzle provided around the propeller.

FR 2 336 297 discloses a propulsion unit being rotatably supported with a support pivot at the vessel. A shroud or nozzle extending horizontally is attached to the vertical support pivot. A holder is positioned in the middle of the nozzle and attached with radial webs to the nozzle. A propeller shaft extends horizontally within the holder and is supported with bearings within the holder. A hub is attached to an outer end of the propeller shaft and propeller blades are attached to the hub. There is a circular portion on the outer ends of the propeller blades forming the rotor of the electric drive motor being provided with a squirrel cage. The stationary stator is formed in the middle portion of the nozzle positioned around the rotor.

A rim drive propulsion unit produces more torque at low speed due to the increase in diameter of the rotor and the stator. The problem in prior art rim drive propulsion units is, however, the lubrication of the bearings of the shaft supporting the rotor of the rim drive propulsion unit. The radial and axial bearings used in prior art rim drives are often based on special arrangements designed for said application. These special arrangements are based on the use of water as the lubrication medium. Water lubrication will, however, cause corrosion problems and the lubrication properties of water are limited. Sea-water is especially corrosive and therefore often fresh-water is used for lubrication. The use of fresh-water for lubrication means that separate fresh-water tanks has to be built in the vessel for this purpose.

### BRIEF DESCRIPTION OF THE INVENTION

An object of the present invention is to achieve an improved propulsion unit solving the previously mentioned problems associated with prior art propulsion units.

The propulsion unit according to the invention is characterized by what is stated in the characterizing portion of claim 1.

The propulsion unit comprises:
a shaft being sealed and supported on radial and axial oil lubricated roller bearings, said shaft having an axial centre line,
a propeller being supported on the shaft via the oil lubricated roller bearings,
an annular housing being fixedly supported at a rotatable to a hull of a vessel attached support structure, the annular housing forming a duct for water flowing through the interior of the annular housing, said axial centre line of the shaft also forming an axial centre line of the annular housing, the annular housing surrounding an outer perimeter of the propeller,
a rim drive electric motor comprising a rotor rim and a stator, said rotor rim being provided on the outer perimeter of the propeller and rotating with the propeller, said stator being provided within the annular housing and surrounding the rotor rim.

The propulsion unit is characterised in that
the support structure is formed of a casing comprising an upper portion and a lower portion, the casing being rotatably supported from the upper portion at the hull of the vessel,
the shaft is rotatably supported with the radial and axial oil lubricated roller bearings within the lower portion of the casing so that an outer end of the shaft protrudes from a first end of the lower portion of the casing, the outer end of the shaft being sealed with a sealing to the first end of the lower portion of the housing in order to prevent water from penetrating into the housing,
the propeller is attached to the outer end of the shaft outside the first end of the lower portion of the casing, said propeller rotating with the shaft, the propeller is a pulling propeller,
a first radial plane passing through an axial middle point of the rotor rim is situated outside the first end of the lower portion of the casing and a second radial plane passing through an axial middle point between the bearings being at an axial distance from each other.

The inventive arrangement makes it possible to use standard oil lubricated roller bearings as radial and axial bearings supporting the shaft within the casing. The bearings are not in contact with sea water in any way. The shaft protruding from the first end of the lower portion of the casing is sealed so that sea-water cannot penetrate into the casing. The same sealing arrangement between the shaft and the casing as is used in present propulsion arrangements where the shaft protrudes from the casing can also be used in the invention. The same type of oil lubricated roller bearings as is used in present propulsion arrangements can be used in the invention. The oil lubrication can simply be realized by positioning a suitable oil container below each roller bearing so that the lower portion of the roller bearing is within the oil layer. Oil lubrication will thus be provided during each revolution of the roller bearing.

The conventional electric motor situated in the casing has been substituted with a rim drive electric motor situated in the housing surrounding the propeller in the inventive arrangement. The casing comprises thus only the shaft as well as the radial and axial bearings supporting the shaft. It is thus only the radial and axial bearings which produce heat within the casing. The amount of heat produced within the casing is thus considerably smaller compared to an arrangement where also the electric motor is situated within the casing. The rather small amount of heat that is produced by the bearings can easily be cooled through the shell of the casing directly to the sea-water surrounding the casing. There is thus no need for special cooling arrangements within the casing.

The lack of an electric motor producing heat within the casing will also have a beneficial impact on the life time of the sealing between the shaft and the casing. Said sealing will only be subjected to the heat produced by the radial bearing near the sealing, but not to the heat produced by the electric motor. The operation temperature of the sealing will thus be lower, which will prolong the life time of the sealing.

The electric motor in the inventive arrangement is based on a rim drive electric motor where the rotor is positioned on the outer perimeter of the propeller and the stator is positioned within the housing surrounding the propeller. The diameter of the outer perimeter of the propeller and the diameter of the housing are big i.e. in the order of several meters. This means that there exists a large surface around the rotor and an even larger surface around the stator, which both surfaces are in direct contact with sea water. The cooling of the rotor and the stator directly to the sea-water surrounding the rotor and the stator is thus efficient. There is no need for any special cooling arrangements of the rim drive electric motor.

A high torque is achieved in the inventive arrangement due to the rim drive electric motor having a much greater diameter compared to a conventional electric motor situated within the casing.

The inventive arrangement is especially suitable to be used in the previously mentioned DP vessels. The thrust needed in the DP vessels where the invention is especially suitable is in the range of 50 to 150 tons. The power of the electric motor in these applications is in the order of megawatts. The diameter of the outer periphery of the propeller is in the order of several meters.

The axial length of the casing and the housing in the inventive arrangement is much smaller e.g. 40 to 50% smaller than the axial length of the casing and the housing in prior art propulsion arrangements having the electric motor within the casing. This means that the dimensions of the service opening in the bottom of the vessel through which the casing and the housing is mounted by lowering it downwards can be made smaller in a corresponding way.

The inventive arrangement has also an impact on the dimensioning of the shaft supporting the propeller. The shaft does not have to withstand torque as the toque produced by the electric motor is directly transferred from the rotor rim positioned on the outer periphery of the propeller to the propeller. The shaft must only withstand bending forces and thrust forces produced by the propeller. This means that a hollow shaft could be used in the inventive arrangement. Cooling water could be directed through the hollow shaft in order to intensify cooling of the bearings and the sealing.

In order to exemplify the dimensions of the propulsion unit one could refer to a prior art Azipod® arrangement for a DP vessel delivered by the applicant. The power of the electric motor positioned within the casing is 4.5 MW, the torque of the electric motor is about 200 kNm, the rotation speed of the electric motor is 210 rpm, the diameter of the outer periphery of the propeller is 3.5 m and the axial length of the total entity comprising the casing and the housing is 6 m. By using a 4.5 MW rim drive electric motor having the same torque one can reduce the length of the total entity by about 50%. The diameter of the propeller could be increased due to the increased torque capacity of the electric motor. The increase of the diameter of the propeller will increase the thrust produced by the propeller. The length of the stator in the electric motor situated within the casing is about 2.2 m and the length of the stator of the rim drive electric motor is about 0.35 m. The increase in the diameter of the rim drive electric motor will naturally result in that the mass of the motor is not reduced correspondingly. The mass of the permanent magnets used in the electric motor could be reduced from about 1000 kg to about 400 kg in the rim drive electric motor. The operation efficiency of the frim drive electric motor is about 97.8%.

### BRIEF DESCRIPTION OF THE DRAWINGS

In the following the invention will be described in greater detail by means of preferred embodiments with reference to the attached drawings, in which:
Figure 1 shows a prior art propulsion unit,
Figure 2 shows a propulsion unit with a pushing propeller,
Figure 3 shows a propulsion unit with a pulling propeller according to the invention.

### DETAILED DESCRIPTION OF THE INVENTION

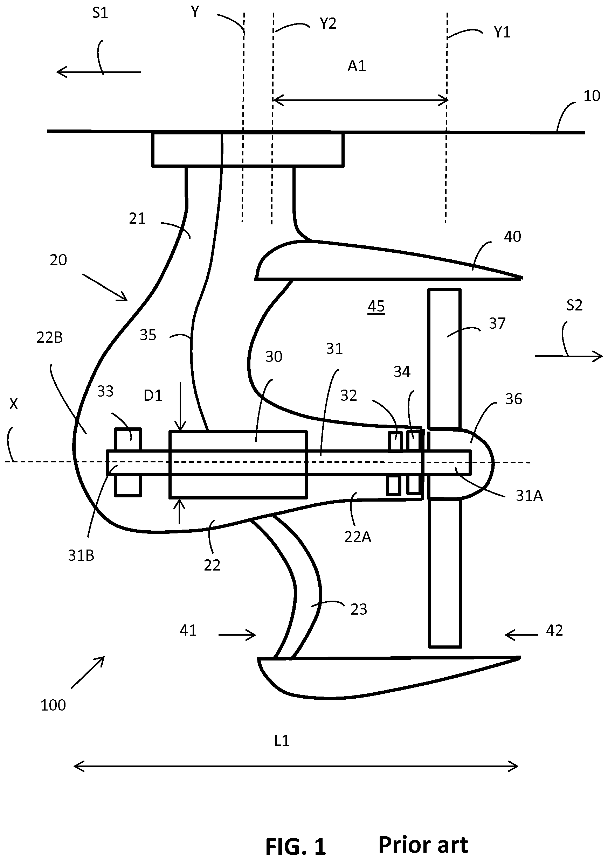

Figure 1 shows a prior art propulsion unit. The propeller is pushing the vessel forwards in a first direction S1. The propulsion unit 100 comprises a casing 20, an electric motor 30, a shaft 31, a propeller 37, and an annular housing 40. The hollow casing 20 comprises an upper portion 21 and a lower portion 22. The upper portion 21 of the casing 20 forms a curved support member for the casing 20. The casing 20 is rotatably supported from the upper portion 21 at a hull 10 of a vessel. The casing 20 can thus be rotated 360 degrees around a vertical centre axis Y in relation to the hull 10 of the vessel. The lower portion 22 of the casing 20 has a first end 22A and a second opposite end 22B. The lower portion 22 of the casing 20 forms a longitudinal compartment having a torpedo-shape. The electric motor 30 is situated within the lower portion 22 of the casing 20.

The electric motor 30 is connected with a cable 35 to a generator situated within the vessel, said generator being driven by a diesel engine. A shaft 31 with an axial centre line X passes through the electric motor 30. The shaft 31 is rotatably supported within bearings 32, 33 in the compartment in the lower portion 22 of the casing 20. A radial bearing 32 is situated on one side of the electric motor 30 at the first end 22A of the lower portion 22 of the casing 20 and a combined radial/axial bearing 33 is situated on the other opposite side of the electric motor 30 at the second end 22B of the lower portion 22 of the casing 20. The rotor of the electric motor 30 is positioned on the shaft 31 and the stator of the electric motor 30 surrounds the rotor. The diameter D1 of the electric motor 30 in the casing 20 is in the order of 0.5 to 2 m. An increase in the diameter D1 of the electric motor 30 would increase the physical size of the casing 20 and weaken the hydrodynamic properties of the casing 20. An outer end 31A of the shaft 31 protrudes from an opening at the first end 22B of the lower portion 22 of the casing 20. The shaft 31 is sealed with a sealing 34 at the first end 22A of the lower portion 22 of the casing 20 so that water cannot penetrate into the casing 20 along the shaft 31. A hub 36 is attached to the outer end 31A of the shaft 31 outside the first end 22A of the lower portion 22 of the casing 20 and a propeller 37 is attached to the hub 36.

There is further an annular housing 40 surrounding the outer perimeter of the propeller 37. The annular housing 40 is attached to the upper portion 21 of the casing 20 and to a vane 23 extending downwards from the lower portion 22 of the casing 20. There can be several vanes 23 supporting the annular housing 40 at the casing 20. The annular housing 40 forms a central duct 45 with an axial flow path for water from a first end 41 to a second end 42 of the annular housing 40. The electric motor 30 drives the propeller 37 via the shaft 31. The axial centre line X of the shaft 31 also forms the axial centre line of the housing 40. The total length L1 of the casing 20 and the annular housing 40 in the axial direction is rather big in this prior art propulsion arrangement. The inner surface of the annular housing 40 forms a cylinder having an axial center axis coinciding with the axial center axis X of the shaft 31. The rotating propeller 37 causes water to flow through the central duct 45 from the first end 41 of the central duct 45 to the second end 42 of the central duct 45 in a second direction S2, which is opposed to the first direction S1.

A first radial plane Y1 passing through an axial middle point of the rotor 51 is situated outside the first end 22A of the lower portion 22 of the casing 20. The first radial plane Y1 passing through the axial middle point of the rotor 51 and a second radial plane Y2 passing through an axial middle point between the bearings 32, 33 are thus at an axial distance A1 from each other. The rotor 51 has a certain width in the axial direction and the axial middle point of the rotor 51 is in the middle of said width. The bearings 32, 33 are positioned at a certain distance from each other in the axial direction. The axial middle point between the bearings 32, 33 is in the middle of said distance.

The radial bearing 32 near the outer end 31A of the shaft 31 is normally a roller bearing and the combined radial/axial bearing 33 at the opposite inner end 31B of the shaft 31 is also normally a roller bearing. The combined radial/axial bearing 33 supports the shaft 31 against radial movement and axial movement. The rotating propeller 37 produces a thrust, which produces an axial force along the shaft 31. The combined radial/axial bearing 33 transfers this axial force into the casing 20 and the casing 20 transfers it further to the hull 10 of the vessel. The thrust produced by the propeller 37 is amplified by the housing 40 at low speeds. The situation can be such that the propeller 37 produces 60% of the total thrust and the housing 40 produces 40% of the total thrust at low speeds. The housing 40 forms a kind of a nozzle and is advantageously used in propulsion units in so called Dynamic Positioning (DP) vessels used in oil drilling. There are several propulsion units in such vessels and the vessel is kept steady in position by the propulsion units. This means that a big thrust is needed at low speed in order to keep the vessel continuously in position especially in rough seas.

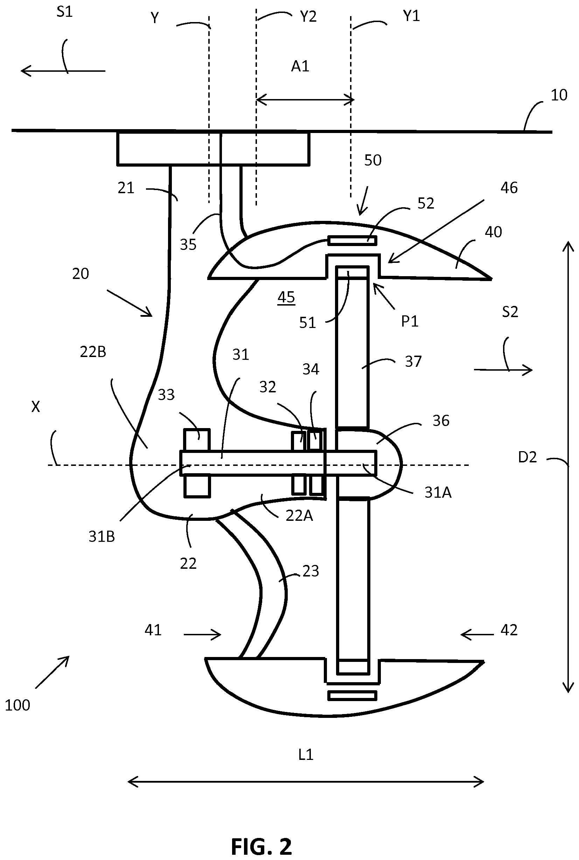

Figure 2 shows a propulsion unit with a pushing propeller. The propeller is pushing the vessel forwards in the first direction S1. A pushing propeller is not within the scope of protection of claim 1.

The propulsion unit 100 in comprises a casing 20, an electric motor 50, a shaft 31, a propeller 37, and an annular housing 40. The hollow casing 20 comprises an upper portion 21 and a lower portion 22. The upper portion 21 of the casing 20 forms a curved support member for the casing 20. The casing 20 is rotatably supported from the upper portion 21 at a hull 10 of a vessel. The casing 20 can thus be rotated 360 degrees around a vertical centre axis Y in relation to the hull 10 of the vessel. The lower portion 22 of the casing 20 has a first end 22A and a second opposite end 22B. The lower portion 22 of the casing 20 forms a longitudinal compartment for the shaft 31 and the bearings 32, 33.

The electric motor 30 positioned in the casing 20 in figure 1 has been substituted by a rim drive electric motor 50 positioned in the housing 40. A shaft 31 with an axial centre line X is still rotatably supported in the compartment in the lower portion 22 of the casing 20 with a radial bearing 32 and with a combined radial/axial bearing 33. An outer end 31A of the shaft 31 protrudes from an opening at the first end 22A of lower portion 22 of the casing 20. A hub 36 is attached to the outer end 31A of the shaft 31 outside the first end 22A of the lower portion 22 of the casing 20 and a propeller 37 is attached to the hub 36.

There is further an annular housing 40 supported at the casing 20. The annular housing 40 is supported directly at the upper portion 21 of the casing 20 and through a vane 23 at the lower portion 22 of the casing 20. The annular housing 40 surrounds an outer perimeter of the propeller 37 and forms a central duct 45 with an axial flow path for water from a first end 41 to a second end 42 of the annular housing 40. The propeller 37 is driven by a rim drive electric motor 50. The rime drive electric motor 50 is an induction motor comprising a rotor rim 51 and a stator 52. The rotor rim 51 is provided on the outer perimeter of the propeller 37 i.e. on the outer tips of the propeller 37 blades and rotates with the propeller 37. The stator 52 is mounted within the annular housing 40 and surrounds the rotor rim 51. The rotor rim 51 comprises permanent magnets and forms a permanent magnet rotor.

A first radial plane Y1 passing through an axial middle point of the rotor 51 is situated outside the first end 22A of the lower portion 22 of the casing 20. The first radial plane Y1 passing through the axial middle point of the rotor 51 and a second radial plane Y2 passing through an axial middle point between the bearings 32, 33 are thus at an axial distance A1 from each other. The rotor 51 has a certain width in the axial direction and the axial middle point of the rotor 51 is in the middle of said width. The bearings 32, 33 are positioned at a certain distance from each other in the axial direction. The axial middle point between the bearings 32, 33 is in the middle of said distance.

The electric power needed in the rim drive electric motor 50 is produced within the hull 10 of the ship. The electric power can be produced by a generator connected to a diesel engine. The electric power to the stator 52 of the rim drive electric motor 50 is supplied by cables 35 running from the generator within the interior of the hull 10 of the vessel through the casing 20 and further to the stator 52 within the annular housing 40.

At least the first end 22A of the lower portion 22 of the casing 20 is situated within the annular housing 40. The rotating propeller 37 causes water to flow through the central duct 45 from the first end 41 of the central duct 45 to the second end 42 of the central duct 45 in the second direction S2, which is opposite to the first direction S1. The water flow passes thus along the outer surface of the casing 20 before entering into the central duct 45. The casing 20 and the annular housing 40 have a smooth form in order to allow water to pass smoothly along the surfaces of said equipment. The upper portion 21 of the casing 20 is situated at an axial distance from the propeller 37, which means that the casing 20 does not significantly disturb the flow of water to the propeller 37. The water flow has time to stabilize after passing the casing 20 and before entering the propeller 37. The second direction S2 runs along the central axis X of the shaft 31.

The casing 20 shown in figure 2 can be made much shorter in the axial direction compared to the casing 20 in figure 1. This is due to the fact that the electric motor 50 driving the propeller 37 has been transferred from the casing 20 to the housing 40. The bearings 32, 33 supporting the shaft 31 within the compartment at the lower portion 22 of the casing 20 can be conventional oil lubricated roller bearings 32, 33. A lower portion of the roller bearings 32, 33 can be positioned in oil, which provides lubrication during the revolution of the bearings 32, 33. There is thus no need for making special arrangements for lubrication of the bearings 32, 33. The heat generated by the bearings 32, 33 will warm the air within the casing 20 and this warm air within the casing 20 will be cooled when it passes along the inner surfaces of the shell of the casing 20. The outer surface of the shell of the casing 20 is in direct contact with the surrounding sea water and will thus be cooled by the sea water passing along the outer surface of the shell of the casing 20.

The sealing 34 sealing the shaft 31 at the first end 22A of the lower portion 22 of the casing 20 where the outer end 31A of the shaft 31 protrudes from the first end 22A of the lower portion 22 of the casing 20 is externally heated only by the heat produced by the bearings 32, 33. It is mainly the radial bearing 32 situated adjacent to the sealing 34 that produces external heat to the sealing 34. There is no electric motor within the lower portion 22 of the casing 20 which would cause additional external heating of the sealing 34. This means that the operating temperature of the sealing 34 will remain at a lower level prolonging the lifetime of the sealing 34.

The rim drive electric motor 50 generates a high torque, which is beneficial in propulsion applications. The high torque is due to the great diameter D2 of the rotor 51 in the rim drive electric motor 50. The torque of an electric motor is proportional to the volume of the electric motor. The volume of the rim drive electric motor 50 is increased by the great diameter D2 of the rim drive electric motor 50. The diameter D2 of the rim drive electric motor 50 in figure 2 is in the order of 2 to 6 times the diameter D1 of the electric motor 30 in figure 1. A rim drive electric motor 50 can be designed so that sufficient cooling of the stator 52 directly to the surrounding sea water can be achieved. Also the rotor 51 of the rim drive electric motor 50 can be cooled directly to the surrounding sea water. The rotor 51 rotates in an annular grove 46 formed in the inner surface of the housing 40. A passage P1 is arranged in the annular grove 46 between the rotor 51 and the stator 52 allowing sea water to pass through said passage P1 when sea water is passing through the central duct 45. The sea water flowing in the passage P1 will cool both the rotor 51 and the stator 52. The stator 52 of the rim drive electric motor 50 will also be cooled by sea water passing on the outer surface of the annular housing 40. The outer surface of the housing 40 is large due to the big diameter of the housing 40 and forms therefore a large cooling surface for the stator 52, said large cooling surface being in direct contact with sea water. The cooling of the stator 52 can thus be arranged as a passive cooling directly through the shell of the housing 40 to the sea water surrounding the shell of the housing 40.

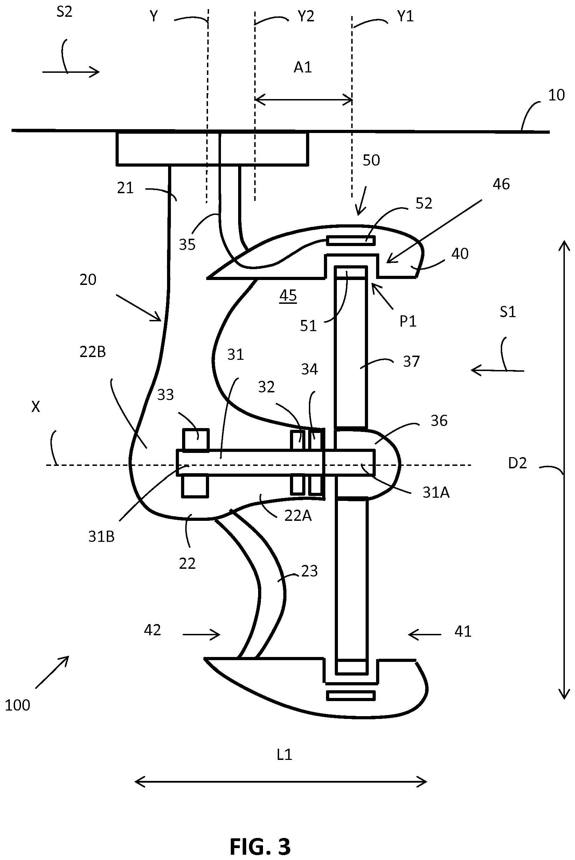

Figure 3 shows a propulsion unit with a pulling propeller according to the invention. The propeller is pulling the vessel forwards in the second direction S2.

This propulsion unit 100 corresponds to the propulsion unit 100 shown in figure 2 except for the propeller 37 and the housing 40. The propeller 37 is working in an opposite direction S1 compared to the working direction S2 of the propeller 37 in figure 2. The direction of the housing 40 in this propulsion unit is turned 180 degrees compared to the direction of the housing 40 in the propulsion unit in figure 2. At least the first end 22A of the lower portion 22 of the casing 20 is also in this propulsion unit situated within the annular housing 40. The rotating propeller 37 causes water to flow through the central duct 45 from the first end 41 of the central duct 45 to the second end 42 of the central duct 45 in the first direction S1. The water flows thus freely into the central duct 45 and passes along the outer surface of the casing 20 when leaving the central duct 45. The casing 20 and the annular housing 40 have a smooth form as in the propulsion unit in figure 1 in order to allow water to pass smoothly along the surfaces of said equipment. The upper portion 21 of the casing 20 is situated at an axial distance from the propeller 37, which means that the casing 20 does not significantly disturb the flow of water ejected from the propeller 37.

The casing 20 can be rotated 360 degrees around a vertical central axis Y in relation to the hull 10 of the vessel. The shaft 31 rotates around a horizontal central axis X. The angle between the swivel axis Y of the casing 20 and the swivel axis X of the shaft 31 is thus 90 degrees in the figures. The swivel axis X of the shaft 31 can naturally be inclined in relation to the horizontal plane. An inclined swivel axis X of the shaft 31 might result in hydrodynamic advantages. An inclined swivel axis X of the shaft 31 can be achieved by tilting the whole casing 20 in relation to the hull 10 of the vessel.

The invention and its embodiments are not limited to the examples described above but may vary within the scope of the claims.

## Claims

1. A propulsion unit comprising:
a shaft (31) being sealed and supported on radial and axial oil lubricated roller bearings (32, 33), said shaft (31) having an axial centre line (X),
a propeller (37) being supported on the shaft (31) via the oil lubricated roller bearings (32, 33),
an annular housing (40) being fixedly supported to a support structure (20), the upper part of which is adapted to be rotatably attached to a hull (10) of a vessel, the annular housing (40) forming a duct (45) for water flowing through the interior of the annular housing (40), said axial centre line (X) of the shaft (31) also forming an axial centre line of the annular housing (40), the annular housing (40) surrounding an outer perimeter of the propeller (37),
a rim drive electric motor (50) comprising a rotor rim (51) and a stator (52), said rotor rim (51) being provided on the outer perimeter of the propeller (37) and rotating with the propeller (37), said stator (52) being provided within the annular housing (40) and surrounding the rotor rim (51),
**characterised in that**
the support structure (20) is formed of a casing (20) comprising an upper portion (21) and a lower portion (22), the casing (20) being adapted to be rotatably supported from the upper portion (21) at the hull (10) of the vessel,
the shaft (31) is rotatably supported with the radial and axial oil lubricated roller bearings (32, 33) within the lower portion (22) of the casing (20) so that an outer end (31A) of the shaft protrudes from a first end (22A) of the lower portion (22) of the casing (20), the outer end (31A) of the shaft (31) being sealed with a sealing (34) to the first end (22A) of the lower portion (22) of the housing (20) in order to prevent water from penetrating into the housing (20),
the propeller (37) is attached to the outer end (31A) of the shaft (31) outside the first end (22A) of the lower portion (22) of the casing (20), said propeller (37) rotating with the shaft (31), the propeller (37) is a pulling propeller,
a first radial plane (Y1) passing through an axial (X) middle point of the rotor rim (51) is situated outside the first end (22A) of the lower portion (22) of the casing (20) and a second radial plane (Y2) passing through an axial middle point between the bearings (32, 33) being at an axial (X) distance (A1) from each other.

2. The propulsion unit according to claim 1, **characterized in that** an inner surface of the annular housing (40) comprises an annular groove (46), said rotor rim (51) rotating within said annular groove (46).

3. The propulsion unit according to claim 2, **characterized in that** there is a passage (P1) between the rotor rim (51) and the housing (40) in the groove (46), whereas water can pass through said passage (P1) in order to cool the rotor (51) and the stator (52).

4. The propulsion unit according to any one of claims 1 to 3, **characterized in that** the duct (45) passing through the interior of the annular housing (40) is cylindrical.

5. The propulsion unit according to any one of claims 1 to 4, **characterized in that** at least the first end (22A) of the lower portion (22) of the casing (20) is situated within the annular housing (40).

6. The propulsion unit according to any one of claims 1 to 5, **characterized in that** the rotor (51) is a permanent magnet rotor.

7. The propulsion unit according to any one of claims 1 to 6, **characterized in that** the cooling of the stator (52) is arranged as a passive cooling directly through the shell of the housing (40) to the sea water surrounding the shell of the housing (40).

## Patentansprüche

1. Antriebs-Einheit, die umfasst:
eine Welle (31), die in radialen und axialen, ölgeschmierten Wälzlagern (32, 33) abgedichtet und gelagert ist, wobei die Welle (31) eine axiale Mittellinie (X) hat,
einen Propeller (37), der über die ölgeschmierten Wälzlager (32, 33) an der Welle (31) gelagert ist,
ein ringförmiges Gehäuse (40), das fest an einer Lagerungsstruktur (20) gelagert ist, deren obere Teil so eingerichtet ist, dass er drehbar an einem Rumpf (10) eines Wasserfahrzeugs angebracht ist, wobei das ringförmige Gehäuse (40) eine Leitung (45) für Wasser bildet, das durch den Innenraum des ringförmigen Gehäuses (40) fließt, die axiale Mittellinie (X) der Welle (31) auch eine axiale Mittellinie des ringförmigen Gehäuses (40) bildet und das ringförmige Gehäuse (40) einen Außenumfang des Propellers (37) umschließt,
einen Ringantrieb-Elektromotor (50), der einen Läufer-Ring (51) sowie einen Ständer (52) umfasst, wobei sich der Läufer-Ring (51) an dem Außenumfang des Propellers (37) befindet und sich mit dem Propeller (37) dreht und sich der Ständer (52) im Inneren des ringförmigen Gehäuses (40) befindet und den Läufer-Ring (51) umschließt,
**dadurch gekennzeichnet, dass**
die Lagerungsstruktur (20) aus einem Gehäuse (20) besteht, das einen oberen Abschnitt (21) und einen unteren Abschnitt (22) umfasst, das Gehäuse (20) so eingerichtet ist, dass es über den oberen Abschnitt (21) drehbar an dem Rumpf des Wasserfahrzeugs gelagert ist,
die Welle (31) im Inneren des unteren Abschnitts (22) des Gehäuses (20) mit den radialen und axialen, ölgeschmierten Wälzlagern (32, 33) drehbar so gelagert ist, dass ein äußeres Ende (31A) der Welle von einem ersten Ende (22A) des unteren Abschnitts (22) des Gehäuses (20) vorsteht, das äußere Ende (31A) der Welle (31) mit einer Dichtung (34) an dem ersten Ende (22A) des unteren Abschnitts (22) des Gehäuses (20) abgedichtet ist, um zu verhindern, dass Wasser in das Gehäuse (20) eindringt,
der Propeller (37) an dem äußeren Ende (31A) der Welle (31) außerhalb des ersten Endes (22A) des unteren Abschnitts (22) des Gehäuses (20) angebracht ist, der Propeller (37) sich mit der Welle (31) dreht und der Propeller (37) ein Zugpropeller ist,
eine erste radiale Ebene (Y1), die durch einen axialen Mittelpunkt (X) des Läufer-Rings (51) hindurch verläuft und außerhalb des ersten Endes (22A) des unteren Abschnitts (22) des Gehäuses (20) liegt, und
eine zweite radiale Ebene (Y2), die durch einen axialen Mittelpunkt zwischen den Lagern (32, 33) verläuft, in einem Abstand (A1) entlang der Achse (X) zueinander sind.

2. Antriebs-Einheit nach Anspruch 1, **dadurch gekennzeichnet, dass** eine Innenfläche des ringförmigen Gehäuses (40) eine Ringnut (46) umfasst und sich der Läufer-Ring (51) im Inneren der Ringnut (46) dreht.

3. Antriebs-Einheit nach Anspruch 2, **dadurch gekennzeichnet, dass** ein Durchlass (P1) zwischen dem Läufer-Ring (51) und dem Gehäuse (40) in der Nut (46) vorhanden ist, so dass Wasser durch den Durchlass (P1) hindurchfließen kann, um den Läufer (51) und den Ständer (52) zu kühlen.

4. Antriebs-Einheit nach einem der Ansprüche 1 bis 3, **dadurch gekennzeichnet, dass** die Leitung (45), die durch den Innenraum des ringförmigen Gehäuses (40) hindurch verläuft, zylindrisch ist.

5. Antriebs-Einheit nach einem der Ansprüche 1 bis 4, **dadurch gekennzeichnet, dass** wenigstens das erste Ende (22A) des unteren Abschnitts (22) des Gehäuses (20) im Inneren des ringförmigen Gehäuses (40) liegt.

6. Antriebs-Einheit nach einem der Ansprüche 1 bis 5, **dadurch gekennzeichnet, dass** der Läufer (51) ein Permanentmagnet-Läufer ist.

7. Antriebs-Einheit nach einem der Ansprüche 1 bis 6, **dadurch gekennzeichnet, dass** die Kühlung des Ständers (52) als eine passive Kühlung direkt über den Mantel des Gehäuses (40) mit dem Meerwasser eingerichtet ist, das den Mantel des Gehäuses (40) umgibt.

## Revendications

1. Unité de propulsion comprenant :
un arbre (31) rendu étanche et supporté sur des roulements à billes lubrifiés par huile (32, 33) radiaux et axiaux, ledit arbre (31) possédant un axe central (X),
une hélice (37) supportée sur l'arbre (31) par l'intermédiaire des roulements à billes lubrifiés par huile (32, 33),
une enveloppe annulaire (40) supportée rigidement sur une structure de support (20) dont la partie supérieure est conçue pour être fixée tout en pouvant tourner à la coque (10) d'un vaisseau, l'enveloppe annulaire (40) formant un conduit (45) pour de l'eau s'écoulant au travers de la partie intérieure de l'enveloppe annulaire (40), ledit axe central (X) de l'arbre (31) formant également un axe central de l'enveloppe annulaire (40), l'enveloppe annulaire (40) entourant le périmètre externe de l'hélice (37),
un moteur électrique à entraînement circonférentiel (50) comprenant une couronne de rotor (51) et un stator (52), ladite couronne de rotor (51) étant disposée sur le périmètre externe de l'hélice (37) et tournant avec l'hélice (37), ledit stator (52) étant disposé à l'intérieur de l'enveloppe annulaire (40) et entourant la couronne de rotor (51),
**caractérisée en ce que**
la structure de support (20) est formée d'un carter (20) comprenant une partie supérieure (21) et une partie inférieure (22), le carter (20) étant conçu pour être supporté à partir de la partie supérieure (21) au niveau de la coque (10) du vaisseau tout en pouvant tourner,
l'arbre (31) est supporté tout en pouvant tourner avec les roulements à billes lubrifiés par huile (32, 33) radiaux et axiaux à l'intérieur de la partie inférieure (22) du carter (20) de sorte à ce que l'extrémité externe (31A) de l'arbre dépasse d'une première extrémité (22A) de la partie inférieure (22) du carter (20), l'extrémité externe (31A) de l'arbre (31) étant rendue étanche avec un joint (34) sur la première extrémité (22A) de la partie inférieure (22) de l'enveloppe (20) afin d'empêcher toute pénétration de l'eau dans l'enveloppe (20),
l'hélice (37) est fixée à l'extrémité externe (31A) de l'arbre (31) à l'extérieur de la première extrémité (22A) de la partie inférieure (22) du carter (20), ladite hélice (37) tournant avec l'arbre (31), l'hélice (37) étant une hélice de traction,
un premier plan radial (Y1), traversant le milieu axial (X) de la couronne de rotor (51), est situé à l'extérieur de la première extrémité (22A) de la partie inférieure (22) du carter (20), et un second plan radial (Y2), traversant le milieu axial entre les roulements (32, 33), se trouve à une distance (A1) axiale (X) de l'autre plan.

2. Unité de propulsion selon la revendication 1, **caractérisée en ce que** la surface interne de l'enveloppe annulaire (40) comprend une rainure annulaire (46), ladite couronne de rotor (51) tournant à l'intérieur de ladite rainure annulaire (46)

3. Unité de propulsion selon la revendication 2, **caractérisée en ce qu'**il existe un passage (P1) situé entre la couronne de rotor (51) et l'enveloppe (40) dans la rainure (46), tandis que de l'eau peut traverser ledit passage (P1) afin de refroidir le rotor (51) et le stator (52).

4. Unité de propulsion selon l'une quelconque des revendications 1 à 3, **caractérisée en ce que** la conduite (45) traversant l'intérieur de l'enveloppe annulaire (40) est cylindrique.

5. Unité de propulsion selon l'une quelconque des revendications 1 à 4, **caractérisée en ce qu'**au moins la première extrémité (22A) de la partie inférieure (22) du carter (20) est située à l'intérieur de l'enveloppe annulaire (40) .

6. Unité de propulsion selon l'une quelconque des revendications 1 à 5, **caractérisée en ce que** le rotor (51) est un rotor à aimant permanent.

7. Unité de propulsion selon l'une quelconque des revendications 1 à 6, **caractérisée en ce que** le refroidissement du stator (52) est agencé sous la forme d'un refroidissement passif directement au travers de la coque de l'enveloppe (40) à l'eau de mer entourant la coque de l'enveloppe (40).
